# EUROPÄISCHE PATENTSCHRIFT

(11) **EP 1 101 632 B1**
(45) Veröffentlichungstag und Bekanntmachung des Hinweises auf die Patenterteilung: **27.02.2008**
(21) Anmeldenummer: 00124053.0
(22) Anmeldetag: 04.11.2000
(51) Int. Cl.: B60B 21/12, B60C 27/04, B60C 17/04, B60C 17/10

(54) **Fahrzeugrad mit einem Notlaufstützkörper**
Vehicle wheel with an emergency running support body
Roue de véhicule comportant un corps d'appui pour roulement de secours

(30) Priorität: 20.11.1999 DE 19955832
(43) Veröffentlichungstag der Anmeldung: 23.05.2001
(73) Patentinhaber: Continental Aktiengesellschaft, 30165 Hannover (DE)
(72) Erfinder: Dieckmann, Andreas, 30163 Hannover (DE); Hellweg, Hans-Bernd, Dr., 67251 Freinsheim (DE); Glinz, Michael, 31535 Neustadt (DE); Jenke, Roland, 29693 Hademsdorf (DE); Busche, Joachim, 30419 Hannover (DE); Frerichs, Udo, 30855 Langenhagen (DE)

(56) Entgegenhaltungen:
- WO-A-01/28789
- DE-A- 2 613 802
- DE-A- 2 716 828
- DE-A- 3 439 949

## Beschreibung

Die Erfindung betrifft ein Fahrzeugrad mit einem Notlaufstützkörper für einen auf einer Radfelge befestigten Luftreifen, der im wesentlichen einen Laufstreifen, zwei Seitenwände, eine Karkasse, Verstärkungselemente, sowie zwei mit Wulstkernen versehene Reifenwülste aufweist, bei dem der Notlaufstützkörper als schalenförmiger Ringkörper innerhalb des Luftreifens ausgebildet ist, der auf seiner Außenseite eine den Reifen bzw. die Innenseite des Laufstreifens im Notlaufzustand abstützende Notlauffläche aufweist und sich auf der Radfelge abstützt, mit einem oder mehreren innerhalb des Luftreifens befindlichen und mit Gleitmittel gefüllten Behältern, wobei die Behälter Einrichtungen zur Ausgabe des Gleitmittels im Notlaufzustand aufweisen.

Fahrzeugräder mit Notlaufstützkörpern sollen in dem kritischen Fall eines plötzlichen Druckverlustes in einem Reifen einen stabilen Fahrzustand und eine Notlauffähigkeit über eine bestimmte Strecke oder Zeit erhalten. Weiterhin bieten solche Fahrzeugräder den Vorteil, daß im Rahmen der zur Energieeinsparung kontinuierlich reduzierten Gewichte der Fahrzeuge auf das Mitführen von Reserverädern und/oder nötigem Werkzeug zu deren Montage verzichtet werden kann.

Unter Notlauf oder Notlaufzustand wird hierbei der Fahrzustand verstanden, bei dem durch einen plötzlichen Druckverlust in einem Reifen, etwa durch eine äußere Beschädigung, die normalerweise vorhandenen Führungs-, Haftungs- und Stabilisierungseigenschaften des Reifens als Bindeglied zwischen Fahrzeug und Fahrbahn nicht mehr im ursprünglichen Maße vorhanden sind, bei dem jedoch trotzdem eine Lauffähigkeit und Nutzbarkeit soweit erhalten bleibt, daß die Sicherheit eines Fahrzeuges nicht unzulässig eingeschränkt wird. Der Notlaufzustand ermöglicht es dann, die Fahrt für eine bestimmte Strecke problemlos fortzusetzen, mindestens aber bis zum nächsten Reparaturbetrieb.

Im Notlaufzustand, in dem bei einem solchen Fahrzeugrad mit Notlaufstützkörper der Reifen bzw. die Innenseite des Laufstreifens auf der Notlauffläche aufliegt, entsteht durch den Abrollradius des die Notlauffläche aufweisenden schalenförmigen Ringkörpers auf der Innenseite der Reifenlauffläche einerseits und des dazu unterschiedlichen und durch die Dicke der Laufflächenbereiche des aufliegenden Reifens vergößerten Abrollradius auf der Straße ein erheblicher Schlupf, d.h. eine Relativbewegung und somit Reibung zwischen Notlauffläche und der Innenseite der Laufflächenbereiche.

Um die damit im Notlaufzustand entstehende starke Erwärmung, die zu einer vorzeitigen thermischen Zerstörung des Reifens führen kann, zu vermeiden, ist es bekannt, im Reifeninnenraum ein Gleitmittel vorzusehen, daß zum Beispiel an der Reifeninnenwand oder an der Notlauffläche aufgestrichen wird.

Solche Gleitmittel werden üblicherweise vor der Montage des Reifens auf Reifeninnenseiten oder entsprechende andere Flächen im Reifeninnenraum aufgestrichen und sind im wesentlichen als Bingham'sches Fluid ausgebildet. In aller Regel besteht das Gleitmittel aus einem Schmierstoff und einem Gerüstbildner, wobei der Gerüstbildner, z.B. Lithium-Seife, die Funktion hat, den eigentlichen Schmierstoff, z.B. Polyglykol, während des normalen Fahrzustandes des Fahrzeugrades in Position bzw. in Bereitschaft zu halten. Erst wenn die Scherspannung innerhalb dieses Gleitmittels durch aufeinanderreibende Teile des Reifens bzw. des Rades groß genug wird, entsteht ein Fließen und damit die Schmierung der relativ zueinander bewegten Teile.

Solche Gleit- oder Schmiermittel können zwar optimal in bezug auf die im Notlaufzustand entstehenden Berührungsstellen innerhalb des Reifens aufgebracht werden, besitzen aber ein erhöhtes Wassergefährdungspotential und sind auch in der Verarbeitung, d.h. beim Aufbringen, gesundheitlich nicht unbedenklich. Des weiteren ergibt sich der Nachteil, daß auch dann, wenn kein Notlaufzustand während der Nutzungszeit eines Reifens aufgetreten ist, das Gleitmittel nicht noch einmal verwendet werden kann bzw. daß beim Reifentausch von Sommerreifen auf Winterreifen wieder Probleme bei der Verarbeitung und bei der Entsorgung entstehen.

Auch kann insbesondere bei hohen Geschwindigkeiten ein manuelles und damit ungleichmäßiges Aufbringen des Schmiermittels zu ungleichförmig verteilten Massen im Reifen führen und damit zur Unwucht während des Betriebes.

Eine Alternative zu einer solchen Ausbildung besteht darin, das Gleitmittel in einem separaten Behälter einzuschließen, der sich im Notlaufzustand öffnet und das Schmiermittel in den Reifeninnenraum freigibt. Die FR 2 095 392 zeigt hierzu insbesondere anhand der dortigen Figuren 5 und 7 mit Schmiermittel gefüllte Kleinbehälter, die an bzw. innerhalb der Felge angeordnet sind und durch die Reibung zwischen Reifen und Felge im Notlaufzustand zerstört bzw. geöffnet werden. Hierbei ergeben sich jedoch entweder bei der Montage des Reifens durch den zusätzlich erforderlichen Einbau der Behälter und ihrer Halterungen Probleme im Hinblick auf die Handhabung oder aber, insbesondere dann, wenn die Behälter im freien inneren Felgenraum angeordnet sind und deren Öffnungen mit dem Innenraum des Reifens in Verbindung stehen, Probleme im Hinblick auf die zu gewährleistende Dichtigkeit des unter Druck stehenden Reifeninnenraums.

Die DE 40 32 645 A1 offenbart die Anordnung von mit Schmiermittel gefüllten Behältern im Reifeninnenraum innerhalb einer besonders ausgebildeten Felge, die zu beiden Seiten des Behälters auf dem Umfang Notlaufflächen bereitstellt. Auch hier wird der Behälter durch Kontakt der Innenseite der Reifenlauffläche mit einem in den Reifeninnenraum hervorstehenden Druckschalter geöffnet. Nachteiligerweise sind zur Halterung und zur Positionierung der Behälter auch bei diesem System besondere Abdeckplatten und Zusatzelemente erforderlich, was den Montageaufwand erhöht und den Reifen insgesamt schwerer werden läßt. Darüber hinaus kann eine solche Anordnung von Schmiermittelbehältern auch nicht für Standardfelgen verwandt werden

Die DE-OS 26 13 802 offenbart den Oberbegriff des Anspruchs 1.

Die zusätzlich benötigten Halterungen bei allen Systemen sind zudem dem bei hohen Geschwindigkeiten starken Fliehkrafteinfluß unterworfen, so daß recht stabile Konstruktionen erforderlich sind, wodurch der Aufwand für die Gesamtkonstruktion ebenso steigt wie der Energiebedarf für die größeren zu bewegenden Massen.

Aufgrund der angerissenen Probleme konnten sich die bisher bekannten Systeme nicht vorrangig durchsetzen.

Der Erfindung liegt also die Aufgabe zugrunde, ein Fahrzeugrad mit einem Notlaufstützkörper so auszubilden, daß ein Gleitmittel ausschließlich bei eintretendem Notlaufzustand bereitgestellt wird, wobei das Gesamtsystem unabhängig von Reifenwechseln wieder verwendet werden kann und auch für Standardfelgen nutzbar ist, keine aufwendigen Konstruktionen im Hinblick auf den Fliehkrafteinfluß erfordert und bei dem lediglich ein geringer Montageaufwand zu berücksichtigen ist.

Gelöst wird die Aufgabe durch die Merkmale des Hauptanspruchs. Weitere vorteilhafte Ausbildungen sind in den Unteransprüchen enthalten.

Hierbei sind die Behälter innerhalb des zwischen Notlaufstützkörper und Felge gebildeten Ringraumes angeordnet, wobei die Einrichtungen zur Ausgabe des Gleitmittels mit dem zwischen Notlaufstützkörper und Luftreifen gebildetem Ringraum in Verbindung stehen. Durch eine solche Ausbildung ist der Aufwand zum Befestigen des Behälters denkbar gering, wobei sich der Behälter selbst in einem Ringraum befindet, der außerhalb der Bereiche liegt, die im Notlaufzustand mit den Innenseiten des Reifens in Berührung kommen. Zudem ist der Montageaufwand vernachlässigbar gering, da der Notlaufstützkörper bereits mit den Behältern versehen sein kann, wenn die Gesamtmontage und damit auch die Reifenmontage erfolgt.

Eine besonders vorteilhafte Ausbildung besteht darin, daß die Behälter auf der Innenseite des Notlaufstützkörpers angeordnet sind und jeweils mindestens einen durch entsprechende Ausnehmungen des Ringkörpers sich bis in den zwischen Notlaufstützkörper und Luftreifen gebildetem Ringraum erstreckenden und im wesentlichen in der Ebene der Notlauffläche des Notlaufstützkörpers endenden Fortsatz aufweisen, an dessen Ende die Einrichtungen zur Ausgabe des Gleitmittels angeordnet sind.

Durch eine solche Ausbildung wird der Behälter selbst durch den schalenförmigen Ringkörper gegenüber Fliehkräften abgestützt, so daß eine besondere Befestigung nicht erforderlich wird und ggf. ein Klemmen oder Kleben des Behälters im Bereich der Innenfläche des Notlaufstützkörpers ausreicht. Darüber hinaus ist der Öffnungsmechanismus, nämlich die Einrichtungen zur Ausgabe des Gleitmittels, mit geringstem Aufwand bereitzustellen, da bei den dünnen und im Regelfall durch ihre Formfestigkeit tragenden Schalen der üblicherweise genutzten schalenförmigen Ringkörper die Fortsätze nur sehr kurz zu sein brauchen, um durch die Ausnehmungen des Notlaufstützkörpers bis in die Ebene der Notlauffläche zu reichen. Bei entsprechender Ausbildung der Ausnehmungen und der Fortsätze, nämlich dergestalt, daß die Fortsätze ein leichtes Übermaß gegenüber den Ausnehmungen aufweisen, kann die Befestigung des Behälters auch über die Klemmwirkung der Fortsätze innerhalb der Ausnehmungen auf einfachste Weise erreicht werden.

Eine weitere vorteilhafte Ausbildung besteht darin, daß die Fortsätze in ihrem im wesentlichen in der Ebene der Notlauffläche des Ringkörpers angeordneten Endbereich Sollbruchstellen, insbesondere Bereiche mit dünneren Außenwänden oder Kerben, aufweisen. Die Lage "im wesentlichen" in der Ebene der Notlauffläche beinhaltet natürlich auch ein leichtes Vorspringen von mindestens Teilen der Endbereiche der Fortsätze über die Ebene der Notlauffläche hinaus, so daß diese Endbereiche im Notlaufzustand mit den dann auf der Notlauffläche aufliegenden bzw. reibenden Reifeninnenseiten in Berührung kommen, wodurch die Sollbruchstellen zerstört werden. Danach läßt die auf das Gleitmittel einwirkende Fliehkraft das Gleitmittel in den zwischen Notlaufstützkörper und Luftreifen gebildeten Ringraum austreten.

Das Gleitmittel ist hierbei natürlich in seinen rheologischen Eigenschaften so eingestellt, daß ein Austreten aufgrund der wirkenden Fliehkräfte ohne Probleme möglich ist.

Ähnliche Vorteile weisen Ausbildungen auf, bei denen die Einrichtungen zur Ausgabe des Gleitmittels als am Ende der Fortsätze und im wesentlichen in der Ebene der Notlauffläche des Notlaufstützkörpers angeordnete abreißbare Verschlüsse, insbesondere Deckel oder Kappen, ausgebildet sind.

Eine weitere vorteilhafte Ausbildung besteht darin, daß die Fortsätze in ihrem im wesentlichen in der Ebene der Notlauffläche des Notlaufstützkörpers angeordneten Endbereich aus einem gegenüber thermischer und/oder mechanischer Belastung empfindlichen Material, insbesondere thermoplastischem Kunststoff, bestehen.

Durch die Ausbildung eines solchen Materials, das bei der durch die Relativbewegung zwischen Notlauffläche und der Innenseite der Laufflächenbereiche entstehenden Erwärmung schmilzt bzw. zerrieben wird, läßt sich auf besonders einfache Weise ein Öffnen der Fortsätze erreichen, wobei auf eine zusätzliche Formgebung durch Kerben oder Kappen verzichtet werden kann.

Eine weitere vorteilhafte Ausbildung besteht darin, daß die Einrichtungen zur Ausgabe des Gleitmittels durch Druckventile oder druckempfindliche Einrichtungen aktivierbar sind. Das kann im Hinblick auf druckempfindliche Einrichtungen z.B. dadurch geschehen, daß die Endbereiche der Fortsätze aus einer Membran bestehen, die bei aufgefülltem Reifendruck leicht nach innen, d.h. in Richtung auf den Containerinnenraum bzw. den Innenraum der Fortsätze gewölbt ist, wodurch bei punktuellen Belastungen im Normalzustand, beispielsweise beim Überfahren einer Bordsteinkante und die dann möglicherweise auch erfolgende Reibung der Reifeninnenseite an der Notlauffläche mangels Berührung ein Öffnen des Behälters bzw. der Enden der Fortsätze nicht stattfinden kann. Erst bei Luftverlust, also im Notlaufzustand, wölben sich dann die Membranen leicht nach außen und springen somit etwas über die Notlauffläche vor, wodurch dann insbesondere bei einer Ausbildung der Membranen aus dem bereits genannten thermoplastischen Kunststoff durch die thermische und mechanische Belastung ein Schmelzen der Membranen erfolgen kann und das Gleitmittel austritt.

Vorteilhafterweise ist die Form der mit Gleitmitteln gefüllten Behälter an die Innenkontur des schalenförmigen Ringkörpers angepaßt. Hierdurch verbessert sich zum einen die bereits genannte problemlose Abstützung gegenüber Fliehkräften und zum anderen lassen sich die Behälter so an den Notlaufstützkörper anfügen oder gar in diesen integrieren, daß die Bauhöhe der Behälter minimiert wird, ohne daß Einbußen am Volumen in Kauf genommen werden müßten.

Bei Notlaufstützkörpern, die konstruktionsbedingte Unstetigkeiten über ihren Umfang aufweisen, beispielsweise bei solchen, die als geschlitzter Ring mit einem Schloß aufgeführt sind und nach Auflegen auf die Felge mit ihren Enden verbunden werden müssen, besteht eine vorteilhafte Ausbildung darin, daß ein oder mehrere Behälter über den Umfang des Fahrzeugrades bzw. über den Umfang des schalenförmigen Ringkörpers so angeordnet sind, daß solche Ungleichförmigkeiten in den Rotationsmassen des Fahrzeugrades bei Drehung des Fahrzeugrades mit gefüllten Behältern ausgeglichen sind. Man erreicht dadurch eine relative Freiheit in der Konstruktion des Notlaufstützkörpers im Hinblick auf ungleiche Massenverteilung und kann auf einfachste Weise eine Kompensation durch die entsprechende Plazierung der Massen der gefüllten Behälter erreichen. Ein weiterer Vorteil, der sich in diesem Falle ergibt, ist der, daß im Notlauffall, bei dem sich die Behälter entleeren, eine leichte Unwucht bzw. eine von außen meßbare Massenungleichförmigkeit auftritt, die direkt oder auch als verarbeitetes Signal dem Fahrer das Eintreten des Notlaufzustandes anzeigt.

Anhand eines Ausführungsbeispiels soll die Erfindung näher beschrieben werden.

Es zeigen:
- Fig. 1: ein aus einer Standardfelge und einem Standardreifen bestehendes Fahrzeugrad mit einem Notlaufstützkörper und mit Gleitmittel gefüllten Behältern
- Fig. 2: einen aufgeschnittenen mit Gleitmittel gefüllten Behälter gem. Fig. 1 in Einzeldarstellung
- Fig. 3: eine prinzipielle Darstellung der Anordnung von Behältern über den Umfang eines Notlaufstützkörpers
- Fig. 4: eine weitere Ausführung eines Fahrzeugrades mit einem Notlaufstützkörper und mit Gleitmittel gefüllten Behältern.

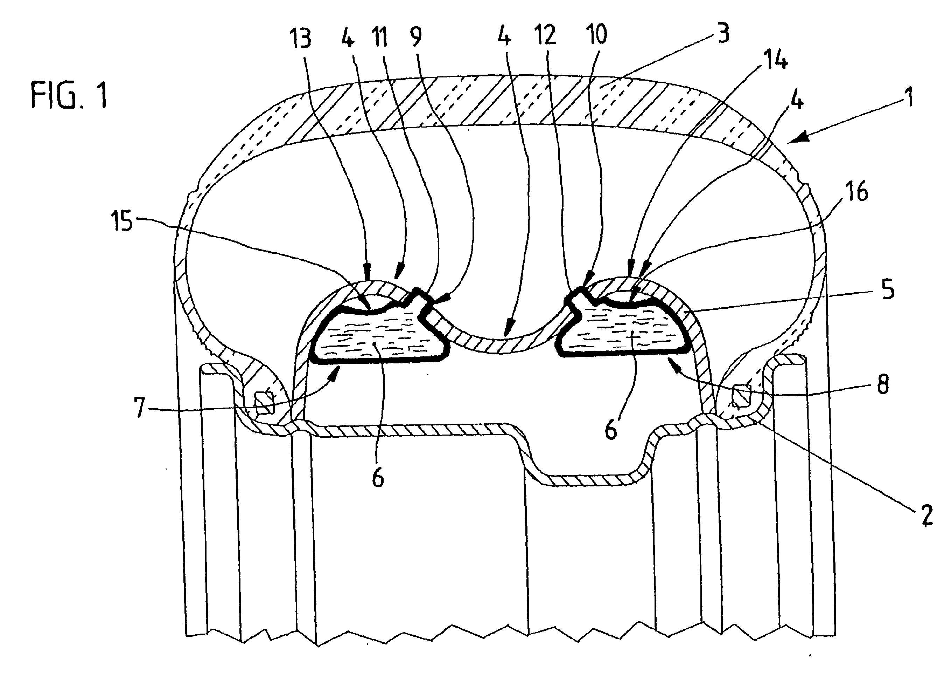

Die Figur 1 zeigt im Schnitt ein Fahrzeugrad mit einem Standard-Luftreifen 1, welcher auf einer Standard-Felge 2 aufgezogen ist und einen Laufstreifenbereich 3 aufweist, der sich im Falle des Luftverlustes, d.h. im Notlaufzustand, auf der Notlauffläche 4 des als schalenförmiger Ringkörper ausgebildeten Notlaufstützkörpers 5 abstützt.

Auf der Innenseite des als schalenförmiger Ringkörper ausgebildeten Notlaufstützkörpers 5 sind mit Gleitmittel 6 gefüllte Behälter 7 und 8 angeordnet. Die Behälter weisen runde Fortsätze 9 und 10 auf, die sich durch entsprechende Bohrungen des Notlaufstützkörpers 5 bis in den zwischen Notlaufstützkörper und Luftreifen gebildeten Ringraum erstrecken. Die Enden 11 und 12 der Fortsätze 9 und 10 liegen leicht vorspringend im wesentlichen in der gewölbten Ebene der Notlauffläche 4 des Notlaufstützkörpers 5 und weisen Einrichtungen zur Ausgabe des Gleitmittels auf bzw. sind in diesem Bereich so ausgebildet, daß sie durch die Relativbewegung bzw. Reibung zwischen Laufstreifenbereich 3 und Notlauffläche 4 geöffnet werden können. Hierzu bestehen die Enden der Fortsätze aus thermoplastischem Kunststoff, der gegenüber thermischer und/oder mechanischer Belastung empfindlich ist und durch die genannte Relativbewegung bzw. Reibung zerstört wird.

Hierbei sind die Fortsätze bzw. deren Enden innerhalb der gewölbten Notlauffläche des als schalenförmiger Ringkörper ausgebildeten Notlaufstützkörpers in den Bereich der mittleren Vertiefung des Notlaufstützkörpers hineinragend und unterhalb der Scheitelpunkte 13 und 14 der nach außen gerichteten und dem Laufstreifenbereich nächstliegenden Wölbungen angeordnet. Durch eine solche Ausbildung und Anordnung sind die Enden der Fortsätze gegenüber zufälligen Abplattungen des Reifens, beispielsweise beim Überfahren einer Bordsteinkante, geschützt und kommen nur dann mit dem Laufstreifenbereich des Reifens in Berührung, wenn tatsächlich ein Notlaufzustand vorhanden ist, d.h. der Druckverlust im Reifen so hoch ist, daß der Laufstreifenbereich sich an die Notlauffläche 4 und anschmiegend an diese anlegt.

Die mit einem Gleitmittel gefüllten Behälter 7 und 8 sind hierbei bereichsweise an die Innenkontur des als schalenförmiger Ringkörper ausgebildeten Notlaufstützkörpers angepaßt und in diesen Kontaktbereichen mit der Innenoberfläche des Notlaufstützkörpers verklebt. Eine Verklebung ist hier völlig ausreichend, da sämtliche auftretenden Fliehkräfte durch den Formschluß mit dem Notlaufstützkörper und die in Umlaufrichtung wirkenden Trägheitskräfte durch den Formschluß der Fortsätze in den Ausnehmungen zusätzlich aufgefangen werden.

Die Gleitmittelbehälter weisen in ihrem oberen bzw. nach außen gerichteten Bereich konkave Einbuchtungen 15 und 16 auf, die zum einen dazu dienen, die durch die Masse des Gleitmittels auftretende Fliehkraft so in die Wandungen des Gleitmittelbehälters einzuleiten, daß mit steigender Fliehkraft eine steigende Anpressung an die Innenoberfläche des Notlaufstützkörpers erfolgt und zum anderen dazu, das Gleitmittel bei im Notlaufzustand geöffneten Fortsatzenden und einwirkender Fliehkraft aus dem Behälter zu leiten.

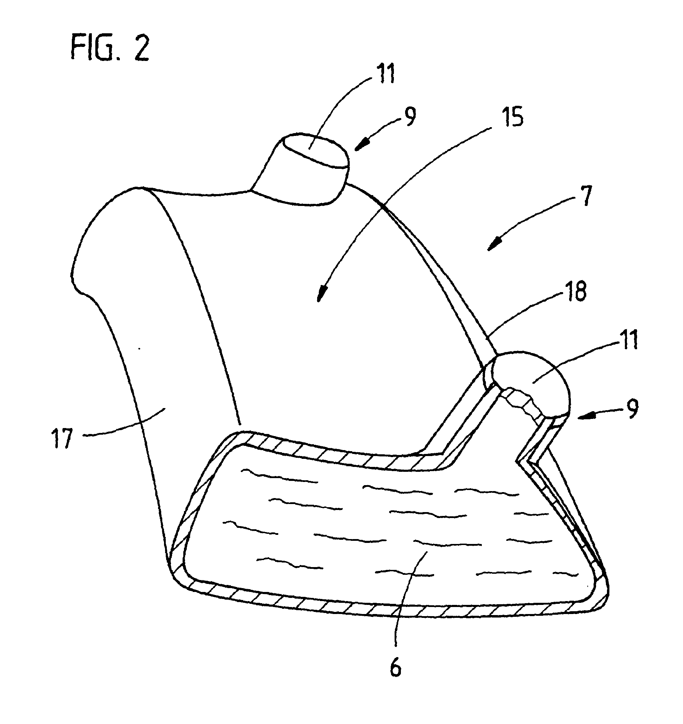

Die Figur 2 zeigt eine mögliche Ausführung eines mit Gleitmittel gefüllten Behälters 7 gemäß Fig. 1 in perspektivischer Einzeldarstellung und an seiner Vorderseite aufgeschnitten.

Der mit Gleitmittel 6 gefüllte Behälter ist, wie hier deutlich ersichtlich, der Umfangskrümmung der Innenseite des Notlaufstützkörpers angepaßt und liegt mit seinen Seitenflächen 17 und 18 im eingebauten Zustand an der Innenfläche des Notlaufstützkörpers an und ist dort mit der Innenfläche verklebt.

Die auf die Gleitmittel-Masse einwirkende Fliehkraft wirkt über die konkave Einbuchtung 15 des Behälters im Sinne einer Verstärkung der Anpressung an die Innenoberfläche des Notlaufstützkörpers.

Die Fortsätze 9 sind hier etwas mehr zur Mitte des Behälters versetzt angeordnet und ragen mit ihren Enden 11 im eigebauten Zustand bis in den Ringraum zwischen Notlaufstützkörper und Reifen, wobei sie sich dort im wesentlichen in der Ebene der Notlauffläche befinden.

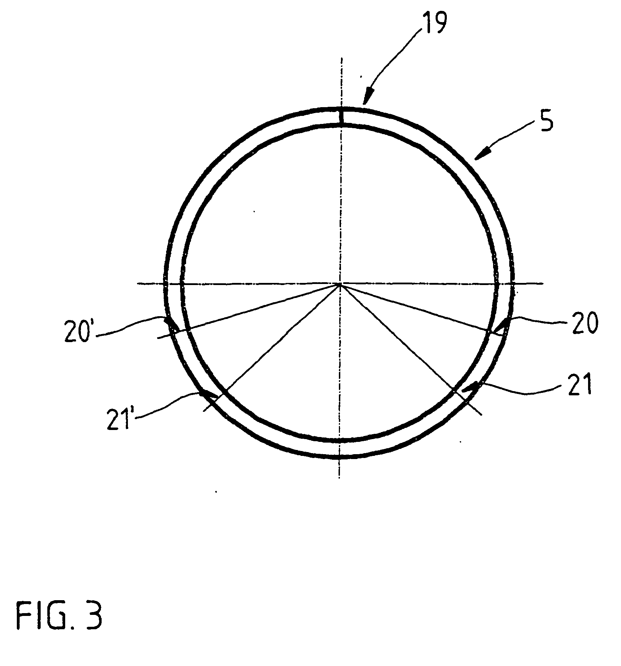

Die Figur 3 zeigt eine prinzipielle Darstellung der Anordnung von mit Gleitmitteln gefüllten Behältern über den Umfang eines Notlaufstützkörpers 5, die dazu dient, einen Massenausgleich zu realisieren.

Der Notlaufstützkörper 5 ist hierbei als geschlitzter Ring ausgeführt, dessen Enden mit einem hier nicht näher dargestellten Schluß oder Verbindungsmechanismus 19 miteinander verbunden werden.

Zum Ausgleich der durch ein solches Schloß entstehenden und über den Umfang des Notlaufstützkörpers ungleichen Massebelegung sind an den Umfangsstellen bzw. Umfangspunkten 20, 20' sowie 21 und 21' jeweils zwei in bezug auf ihre axiale Lage symmetrisch angeordnete mit Gleitmittel gefüllte Behälter befestigt.

Solange die Behälter gefüllt sind, ergibt sich eine Kompensation der durch das Schloß 19 aufgebauten Massenungleichförmigkeit, wodurch eine Rotation des Rades ohne Unwuchterscheinungen möglich wird.

Erst die Entleerung der mit Gleitmittel gefüllten Behälter im Notlaufzustand führt dann wieder zu einer Ungleichheit der Massenverteilung, die dann entweder durch Vibration dem Fahrer den Eintritt des Notlaufzustandes anzeigt oder aber durch geeignete Meßmethoden ausgewertet und zu einer Anzeige umgeformt werden kann.

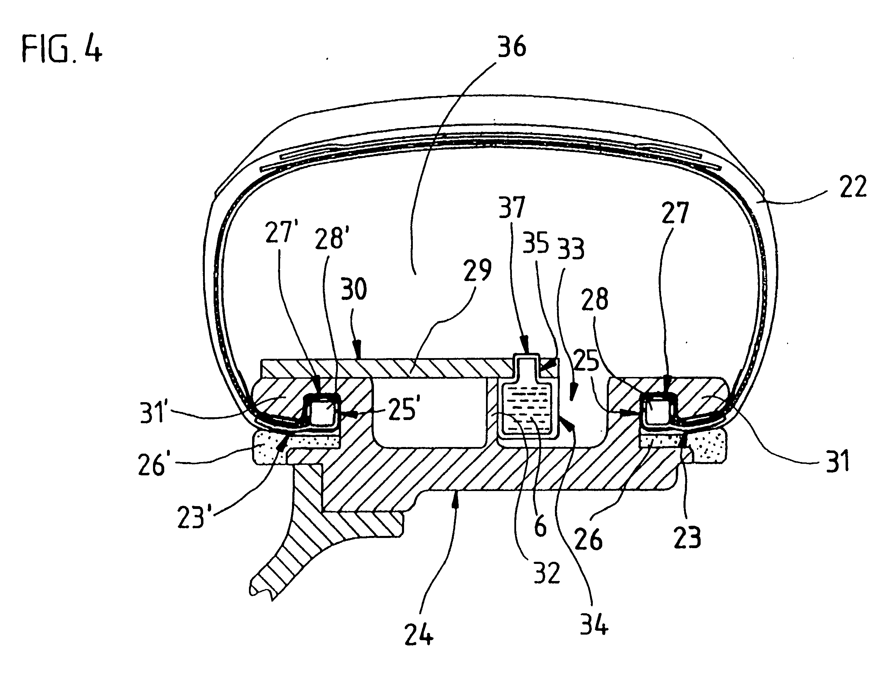

Die Figur 4 zeigt eine weitere Ausführungsform eines Fahrzeugrades mit einem Notlaufstützkörper und mit Gleitmittel gefüllten Behältern, wobei der Luftreifen 22 mit seinen Wulstbereichen 23 und 23' innerhalb in der Felge 24 vorgesehenen Ringkammern 25 und 25' mit Hilfe von Füllringen 26 und 26' geklemmt und so mit der Felge verbunden ist. Hierzu weisen die Wülste 27 und 27' einen elastisch dehnbaren und elastisch stauchbaren Kern 28 und 28' auf.

Innerhalb des Reifens ist ein als schalenförmiger Ringkörper ausgebildeter Notlaufstützkörper 29 angeordnet, der radial außen eine Notlauffläche 30 aufweist, die in beliebiger Weise, beispielsweise mit Profilgebungen oder Rippen, gestaltet sein kann. Im Notlaufzustand stützt sich dann die Innenseite des Luftreifens 22 auf der Notlauffläche 30 ab. Der Notlaufstützkörper 29 ist dabei wiederum auf der Felge 24 abgestützt bzw. an dieser befestigt, hier einerseits auf der Außenseite des Felgenhorns 31' und auf einer im wesentlichen mittig angeordneten Stützrippe 32.

Innerhalb des zwischen Notlaufstützkörper 29 und Felge 24 gebildeten Ringraumes 33 sind mit Gleitmittel 6 gefüllte Behälter 34 angeordnet, die an der Innenseite des als schalenförmiger Ringkörper ausgebildeten Notlaufstützkörpers 29 befestigt sind.

Die Behälter 34 weisen einen runden Fortsatz 35 auf, der sich durch entsprechende Bohrungen des Notlaufstützkörpers 29 bis in den zwischen Notlaufstützkörper und Luftreifen gebildeten Ringraum 36 erstreckt. Die Enden 37 der Fortsätze 35 liegen leicht vorspringend und im wesentlichen in der Ebene der Notlauffläche 30 des Notlaufstützkörpers 29 und weisen Einrichtungen zur Ausgabe des Gleitmittels auf bzw. sind in diesem Bereich so ausgebildet, daß sie durch die Relativbewegung bzw. Reibung zwischen der Innenseite des Reifens 22 und der Notlauffläche 30 geöffnet werden können. Hierzu bestehen auch hier die Enden der Fortsätze aus thermoplastischem Kunststoff, der gegenüber thermischer und/oder mechanischer Belastung empfindlich ist und durch die genannte Relativbewegung bzw. Reibung zerstört wird. Unter Fliehkrafteinfluß kann dann das Gleitmittel 6 aus dem Behälter 34 austreten.

Sowohl der Notlaufstützkörper 29 als auch der Notlaufstützkörper 5 können hierbei aus verschiedenen Materialien, beispielsweise aus Leichtmetall, aus Kunststoff oder auch aus Verbundmaterialien, also etwa als Leichtmetallringe, die in ihren Abstützungsbereichen auf der Felge Elastomermaterialien aufweisen, ausgebildet sein.

Der in der Figur 4 dargestellte Notlaufstützkörper kann hierbei auch doppelseitig ausgebildet sein, wobei dann die Stützrippe 32 entfällt und je ein Notlaufstützkörper sich auf dem jeweiligen Felgenhorn 31 bzw. 31' abstützt und soweit zur Mitte unter Bildung eines Ringraumes zwischen Notlaufstützkörper und Felge 24 vorspringt, daß beidseitig mit Gleitmittel gefüllte Behälter auf der Innenseite der Notlaufstützkörper und innerhalb des zwischen diesem und der Felge 24 gebildeten Ringraumes angeordnet sind.

### Bezugszeichenliste

- 1: Luftreifen
- 2: Felge
- 3: Laufstreifenbereich
- 4: Notlauffläche
- 5: Notlaufstützkörper
- 6: Gleitmittel
- 7, 8: mit Gleitmittel gefüllte Behälter
- 9, 10: Fortsatz
- 11,12: Fortsatzende
- 13, 14: Scheitelpunkt
- 15, 16: konkave Einbuchtung
- 17, 18: Seitenfläche des Behälters
- 19: SchloßNerbindungsmechanismus des Notlaufstützkörpers
- 20, 20': Umfangspunkt am Notlaufstützkörper
- 21, 21': Umfangspunkt am Notlaufstützkörper
- 22: Luftreifen
- 23, 23': Wulstbereich
- 24: Felge
- 25, 25': Ringkammer
- 26, 26': Füllring
- 27, 27': Wulst
- 28, 28': elastischer Kern
- 29: Notlaufstützkörper
- 30: Notlauffläche
- 31, 31': Felgenhorn
- 32: Stützrippe
- 33: Ringraum
- 34: mit Gleitmittel gefüllte Behälter
- 35: Fortsatz
- 36: Ringraum
- 37: Fortsatzende

## Patentansprüche

1. Fahrzeugrad mit einem Notlaufstützkörper für einen auf einer Radfelge befestigten Luftreifen (1, 22), der im wesentlichen einen Laufstreifen, zwei Seitenwände, eine Karkasse, Verstärkungselemente, sowie zwei mit Wulstkernen versehene Reifenwülste aufweist, bei dem der Notlaufstützkörper (5, 29) als schalenförmiger Ringkörper innerhalb des Luftreifens ausgebildet ist, der auf seiner Außenseite eine den Reifen bzw. die Innenseite des Laufstreifens im Notlaufzustand abstützende Notlauffläche (4, 30) aufweist und sich auf der Radfelge (2, 24) abstützt, mit einem oder mehreren innerhalb des Luftreifens befindlichen und mit Gleitmittel gefüllten Behältern (7,8, 34), wobei die Behälter Einrichtungen zur Ausgabe des Gleitmittels im Notlaufzustand aufweisen und innerhalb des zwischen Notlaufstützkörper (5, 29) und Felge (2, 24) gebildeten Ringraumes angeordnet sind, wobei die Einrichtungen zur Ausgabe des Gleitmittels mit dem zwischen Notlaufstützkörper (5, 29) und Luftreifen (1, 22) gebildeten Ringraum in Verbindung stehen, und wobei die Behälter (7,8, 34) auf der Innenseite des Notlaufstützkörpers (5, 29) angeordnet sind und jeweils mindestens einen durch entsprechende Ausnehmungen des Notlaufstützkörpers sich bis in den zwischen Notlaufstützkörper (5, 29) und Luftreifen (1, 22) gebildeten Ringraum erstreckenden und im wesentlichen in der Ebene der Notlauffläche (4, 30) des Notlaufstützkörpers (5, 29) endenden Fortsatz (9,10, 35) aufweisen, an dessen Ende die Einrichtungen zur Ausgabe des Gleitmittels angeordnete sind, **dadurch gekennzeichnet, daß** die Notlauffläche (4,30) mit mindestens einer umlaufenden Vertiefung gewölbt ausgebildet ist, und dass die Fortsätze (9, 10) bzw. deren Enden innerhalb der gewölbten Notlauffläche (4, 30) des als schalenförmiger Ringkörper ausgebildeten Notlaufstützkörpers in den Bereich der Vertiefung des Notlaufstützkörpers hineinragend ausgebildet und unterhalb der Scheitelpunkte (13, 14) der nach außen gerichteten und dem Laufstreifenbereich nächstliegenden Wölbungen angeordnet sind, und dass die Behälter (7, 8) hierbei mindestens bereichsweise an die Innenkontur des als schalenförmiger Ringkörper ausgebildeten Notlaufstützkörpers angepaßt sind.

2. Fahrzeugrad nach Anspruch 1, **dadurch gekennzeichnet, daß** die Fortsätze (9,10, 35) in ihrem im wesentlichen in der Ebene der Notlauffläche (4, 30) des Notlaufstützkörpers angeordneten Endbereich (11,12, 37) Sollbruchstellen, insbesondere Bereiche mit dünneren Außenwänden oder Kerben, aufweisen.

3. Fahrzeugrad nach Anspruch 1 oder 2, 3, **dadurch gekennzeichnet, daß** die Einrichtungen zur Ausgabe des Gleitmittels als am Ende (11,12, 37) der Fortsätze und im wesentlichen in der Ebene der Notlauffläche (4, 30) des Notlaufstützkörpers (5, 29) angeordnete abreißbare Verschlüsse, insbesondere Deckel oder Kappen, ausgebildet sind.

4. Fahrzeugrad nach Anspruch 1 oder 2, **dadurch gekennzeichnet, daß** die Fortsätze (9,10, 35) in ihrem im wesentlichen in der Ebene der Notlauffläche (4, 30) des Notlaufstützkörpers (5, 29) angeordneten Endbereich (11,12, 37) aus einem gegenüber thermischer und / oder mechanischer Belastung empfindlichen Material, insbesondere thermoplastischem Kunststoff, bestehen.

5. Fahrzeugrad nach Anspruch 1 bis 4, **dadurch gekennzeichnet, daß** die Einrichtungen zur Ausgabe des Gleitmittels durch Druckventile aktivierbar sind.

6. Fahrzeugrad nach Anspruch 1 bis 5, **dadurch gekennzeichnet, daß** die Form der mit Gleitmittel gefüllten Behälter (7,8, 34) an die Innenkontur des Notlaufstützkörpers (5, 29) angepaßt ist.

7. Fahrzeugrad nach Anspruch 1 bis 6, **dadurch gekennzeichnet, daß** ein oder mehrere Behälter (7,8, 34) über den Umfang des Fahrzeugrades bzw. über den Umfang des Notlaufstützkörpers (5, 29) so angeordnet sind, daß Ungleichförmigkeiten in den Rotationsmassen des Fahrzeugrades bei Drehung des Fahrzeugrades mit gefüllten Behältern ausgeglichen sind.

## Claims

1. Vehicle wheel with an emergency running support body for a pneumatic tyre (1, 22) which is mounted on a wheel rim and has essentially a tread, two sidewalls, a carcass, reinforcement elements and two tyre beads which are provided with bead cores, in which wheel the emergency running support body (5, 29) is embodied as a shell-shaped annular body within the pneumatic tyre, which annular body has, on its outer side, an emergency running face (4, 30) which supports the tyre or the inside of the tread in the emergency running state and said annular body is supported on the wheel rim (2, 24), with one or more containers (7, 8, 34) which are located within the pneumatic tyre and filled with lubricant, wherein the containers have devices for outputting the lubricant in the emergency running state and are arranged inside the annular space which is formed between the emergency running support body (5, 29) and the rim (2, 24), wherein the devices for outputting the lubricant are connected to the annular space which is formed between the emergency running support body (5, 29) and the pneumatic tyre (1, 22), and wherein the containers (7, 8, 34) are arranged on the inside of the emergency running support body (5, 29) and each have at least one projection (9, 10, 35) which extends through corresponding recesses in the emergency running support body into the annular space formed between the emergency running support body (5, 29) and the pneumatic tyre (1, 22), said projection (9, 10, 35) ending essentially in the plane of the emergency running face (4, 30) of the emergency running support body (5, 29) and the devices for outputting the lubricant being arranged at the end of said projection (9, 10, 35), **characterized in that** the emergency running face (4, 30) is of curved design with at least one circumferential depression, and **in that** the projections (9, 10) or their ends are designed so as to project into the area of the depression of the emergency running support body within the curved emergency running face (4, 30) of the emergency running support body which is embodied as a shell-shaped annular body, and are arranged underneath the apex points (13, 14) of the curved portions which are directed outwards and are closest to the tread area, and **in that** the containers (7, 8) are adapted here at least in certain areas to the internal contour of the emergency running support body which is embodied as a shell-shaped annular body.

2. Vehicle wheel according to Claim 1, **characterized in that** the projections (9, 10, 35) have predetermined break points, in particular areas with relatively thin external walls or notches, in their end area (11, 12, 37) which is arranged essentially in the plane of the emergency running face (4, 30) of the emergency running support body.

3. Vehicle wheel according to Claim 1 or 2, **characterized in that** the devices for outputting the lubricant are embodied as closures, in particular lids or caps, which can be torn off and which are arranged at the end (11, 12, 37) of the projections and essentially in the plane of the emergency running face (4, 30) of the emergency running support body (5, 29).

4. Vehicle wheel according to Claim 1, **characterized in that** the projections (9, 10, 35) are composed, in their end area (11, 12, 37) which is arranged essentially in the plane of the emergency running face (4, 30) of the emergency running support body (5, 29), of a material which is sensitive to thermal and/or mechanical loading, in particular a thermoplast.

5. Vehicle wheel according to Claims 1 to 4, **characterized in that** the devices for outputting the lubricant can be activated by means of pressure valves.

6. Vehicle wheel according to Claims 1 to 5, **characterized in that** the shape of the containers (7, 8, 34) which are filled with lubricant is adapted to the internal contour of the emergency running support body (5, 29).

7. Vehicle wheel according to Claims 1 to 6, **characterized in that** one or more containers (7, 8, 34) are arranged over the circumference of the vehicle wheel or over the circumference of the emergency running support body (5, 29) in such a way that irregularities in the rotational masses of the vehicle wheel are compensated with filled containers when the vehicle wheel rotates.

## Revendications

1. Roue de véhicule comprenant un corps d'appui pour roulement de secours, pour un pneumatique (1, 22) fixé sur une jante de roue, qui présente essentiellement une bande de roulement, deux parois latérales, une carcasse, des éléments de renforcement, ainsi que deux talons de pneu pourvues de tringles, le corps d'appui pour roulement de secours (5, 29) étant réalisé sous forme de corps annulaire en forme de coque à l'intérieur du pneumatique, qui présente sur son côté extérieur une surface de roulement de secours (4, 30) supportant le pneumatique ou le côté intérieur de la bande de roulement dans l'état de roulement de secours, et qui s'appuie sur la jante de roue (2, 24), avec un ou plusieurs récipients (7, 8, 34) se trouvant à l'intérieur du pneumatique et remplis de lubrifiant, les récipients présentant des systèmes pour fournir le lubrifiant dans l'état de roulement de secours et étant disposés à l'intérieur de l'espace annulaire formé entre le corps d'appui pour roulement de secours (5, 29) et la jante (2, 24), les systèmes pour fournir du lubrifiant étant en liaison avec l'espace annulaire formé entre le corps d'appui pour roulement de secours (5, 29) et le pneumatique (1, 22), et les récipients (7, 8, 34) étant disposés du côté intérieur du corps d'appui pour roulement de secours (5, 29) et présentant à chaque fois au moins une saillie (9, 10, 35) s'étendant à travers des évidements correspondants du corps d'appui pour roulement de secours jusque dans l'espace annulaire formé entre le corps d'appui pour roulement de secours (5, 29) et le pneumatique (1, 22) et se terminant essentiellement dans le plan de la surface de roulement de secours (4, 30) du corps d'appui pour roulement de secours (5, 29), à l'extrémité de laquelle les systèmes pour fournir du lubrifiant sont disposés, **caractérisée en ce que** la surface de roulement de secours (4, 30) est réalisée sous forme cintrée avec au moins un renfoncement périphérique et **en ce que** les saillies (9, 10) ou leurs extrémités sont réalisées à l'intérieur de la surface de roulement de secours cintrée (4, 30) du corps d'appui pour roulement de secours réalisé sous forme de corps annulaire en forme de coque de manière à pénétrer dans la région du renfoncement du corps d'appui pour roulement de secours et sont disposées sous les sommets (13, 14) des cintrages orientés vers l'extérieur et adjacents à la région de la bande de roulement, et **en ce que** les récipients (7, 8) sont dans ce cas adaptés au moins en partie au contour intérieur du corps d'appui pour roulement de secours réalisé sous forme de corps annulaire en forme de coque.

2. Roue de véhicule selon la revendication 1, **caractérisée en ce que** les saillies (9, 10, 35) présentent, dans leur région d'extrémité (11, 12, 37) disposée sensiblement dans le plan de la surface de roulement de secours (4, 30) du corps d'appui pour roulement de secours, des points de rupture, notamment des régions avec des parois extérieures plus minces ou des encoches.

3. Roue de véhicule selon la revendication 1 ou 2, **caractérisée en ce que** les systèmes pour fournir le lubrifiant sont réalisés sous forme de fermetures arrachables, notamment des couvercles ou des capuchons, disposés à l'extrémité (11, 12, 37) des saillies et sensiblement dans le plan de la surface de roulement de secours (4, 30) du corps d'appui pour roulement de secours (5, 29).

4. Roue de véhicule selon la revendication 1, **caractérisée en ce que** les saillies (9, 10, 35) se composent, dans leur région d'extrémité (11, 12, 37) disposée sensiblement dans le plan de la surface de roulement de secours (4, 30) du corps d'appui pour roulement de secours (5, 29), d'un matériau sensible vis-à-vis des contraintes thermiques et/ou mécaniques, notamment de plastique thermoplastique.

5. Roue de véhicule selon l'une quelconque des revendications 1 à 4, **caractérisée en ce que** les systèmes pour fournir le lubrifiant peuvent être activés par des soupapes de pression.

6. Roue de véhicule selon l'une quelconque des revendications 1 à 5, **caractérisée en ce que** la forme des récipients (7, 8, 34) remplis de lubrifiant est adaptée au contour intérieur du corps d'appui pour roulement de secours (5, 29).

7. Roue de véhicule selon l'une quelconque des revendications 1 à 6, **caractérisée en ce qu'**un ou plusieurs récipients (7, 8, 34) sont disposés sur la périphérie de la roue du véhicule ou sur la périphérie du corps d'appui pour roulement de secours (5, 29) de telle sorte que des irrégularités dans les masses rotatives de la roue du véhicule lors de la rotation de la roue du véhicule soient compensées par des récipients remplis.
